# EUROPÄISCHE PATENTSCHRIFT

(11) **EP 0 821 804 B1**
(45) Veröffentlichungstag und Bekanntmachung des Hinweises auf die Patenterteilung: **04.10.2001**
(21) Anmeldenummer: 96907980.5
(22) Anmeldetag: 12.04.1996
(51) Int. Cl.: G02B 17/00, G02B 19/00, G02B 6/00, G01J 1/04

(54) **KONUSOPTIK ZUR FOKUSSIERUNG VON STRAHLUNG UND VERWENDUNG DERSELBEN FÜR OPTISCHE BEWEGUNGSMELDER**
CONICAL OPTIC FOR FOCUSSING RADIATION AND USE THEREOF IN OPTICAL MOVEMENT INDICATORS
OPTIQUE CONIQUE PERMETTANT DE FOCALISER UN FAISCEAU ET SON UTILISATION DANS DES INDICATEURS OPTIQUES DE MOUVEMENT

(30) Priorität: 21.04.1995 CH 114295
(43) Veröffentlichungstag der Anmeldung: 04.02.1998
(73) Patentinhaber: Keller, Hans J., 8712 Stäfa (CH)
(72) Erfinder: Keller, Hans J., 8712 Stäfa (CH)
(86) Internationale Anmeldenummer: CH9600132
(87) Internationale Veröffentlichungsnummer: WO9633435

(56) Entgegenhaltungen:
- DE-C- 516 917
- FR-A- 2 362 408
- US-A- 2 881 654
- US-A- 3 271 575
- US-A- 3 413 468
- US-A- 3 751 664
- US-A- 4 577 936
- US-A- 4 650 284
- US-A- 5 006 712
- JOURNAL OF THE OPTICAL SOCIETY OF AMERICA, Bd. 42, Nr. 10, Oktober 1952, NEW YORK US, Seiten 712-715, XP002012725 WILLIAMSON DONALD E.: "Cone Channel Condenser Optics"
- APPLIED OPTICS, Bd. 26, Nr. 2, 15.Januar 1987, NEW YORK US, Seiten 300-305, XP002012726 NING ET AL: "Dielectric Totally Internally Reflecting Concentrators"

## Beschreibung

Die Erfindung betrifft einen optisch innenreflektierenden Konus mit einer Frontöffnung zur Fokussierung einfallender elektromagnetischer Strahlung auf einen im Bereich der hinteren Öffnung angeordneten Sensor, gemäss dem Oberbegriff des Anspruches 1, und insbesondere dessen Verwendung in einem optischen Bewegungsmelder nach dem passiven Infrarotprinzip.

Solche Konusoptiken sind im Fachgebiet der Optik vorbekannt und sind beispielsweise im "The Infrared Handbook", Wolfe/Zissis, Environmental Research Institute of Michigan, USA, 1978, S. 9-13, oder im "Handbook of Optics", W.Driscoll, McGraw Hill, New York, 1978, S. 2-56", beschrieben. Eine derartige Konusoptik wird oft auch als "Light Pipe" oder "Cone Channel Condenser" bezeichnet.
Ferner sind solche Konusoptiken in den US-A- 3 271 575, G. Falbel, FR-A- 2 362 408, R.Winston, und im "Journal of the Optical Society of Amerika", Vol.42, No.10, (1952), D.E. Williamson beschrieben.

Aus US-A- 3 413 468, Astheimer, vorbekannte Konusoptiken bestehen gemäss Fig. 1 aus einem innenreflektierenden Körper 1 mit einer grösseren offenen Frontöffnung 2 und einer kleineren hinteren Öffnung 3. In die Frontöffnung 2 einfallende Strahlung passiert entweder den Konus auf direktem Wege, wie dies für den Strahl 4 gezeigt ist, oder wird je nach Winkel und Eintrittslage, beispielsweise für den Strahl 8, an der Wand 5 reflektiert, um an der hinteren Öffnung wieder auszutreten. Für den gezeigten Strahl 6 tritt eine zweimalige Reflexion an den Wänden 5 und 7 auf, bis er an der hinteren Öffnung wieder austritt. Andere Strahlen können vielfach reflektiert werden.

Dadurch bewirkt die Konusoptik bekanntermassen eine Konzentration der auf die Frontöffnung fallenden Strahlung auf die hintere Öffnung, wo ein Strahlungssensor mit einem oder mehreren Sensorelementen angeordnet ist.

Der Körper des Konus 1 kann als innenverspiegelter Hohlkörper ausgeführt sein oder als massiver, strahlungsdurchlässiger Körper, wobei die Wände 5 und 7 verspiegelt und die beiden Öffnungen 2 und 3 strahlungsdurchlässig sind. Es kann unter gewissen Bedingungen auch die Totalreflexion in einem transparenten Körper ausgenützt werden.

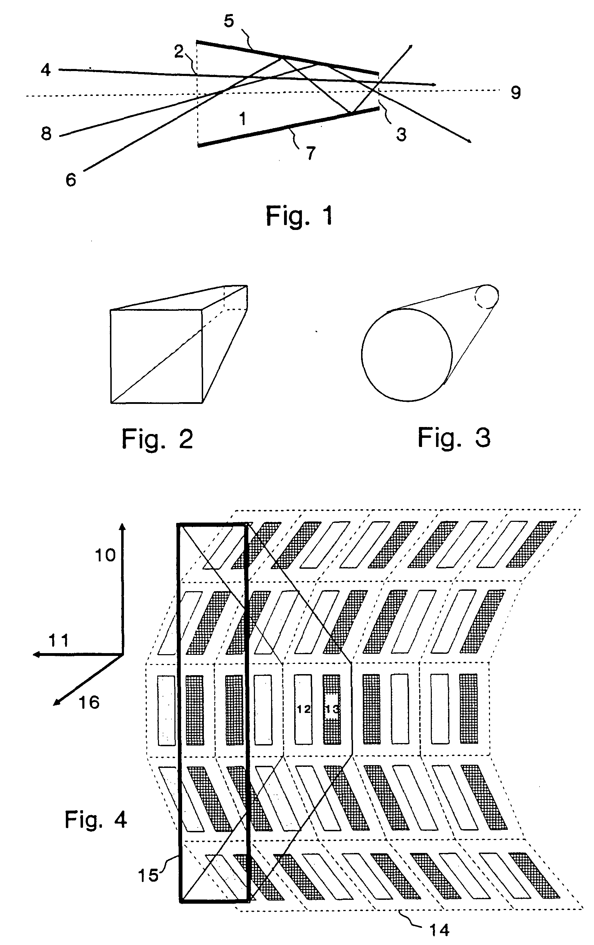

Der Querschnitt des Körpers 1 kann bei bekannten Konusoptiken beispielsweise rund in der Form eines Kegelstumpfes sein (Fig.3), quadratisch in der Form eines Pyramidenstumpfes (Fig. 2), rechteckig oder auch polygonal. Grundsätzlich kann er eine beliebige Form aufweisen, ohne dass die fokussierende Wirkung verloren geht. Oft hat die hintere Öffnung die Form des verwendeten Sensors oder der Sensorelemente, und die Frontöffnung eine geometrisch ähnliche, proportional vergrösserte Form.

Die Wände 5 und 7 sind vielfach im Querschnitt längs der Hauptachse 9 (Fig.1) eben, können aber auch anders gestaltet, z.B. gekrümmt sein.

Solche Konusoptiken haben sich in vielen Anwendungen zur Fokussierung elektromagnetischer Strahlung bewährt, vermögen aber hohen Ansprüchen an die Fokussierung und Abbildung nicht völlig zu genügen.

In der US-A- 5 006 712 ist eine weitere Ausführung bekanntgeworden. Diese Anordnung (Fig.4) verbindet die fokussierende Wirkung einer Konusoptik in der einen Achse 10, mit der vervielfachenden Wirkung von parallelen Spiegeln in der anderen Achse 11. Diese Konusoptik kann beispielsweise zusammen mit einem differentiellen Sensor verwendet werden, der zwei Sensorelemente 12 und 13 aufweist, deren Signale mit umgekehrten Vorzeichen summiert werden. Dadurch entsteht in Richtung der Achse 11 eine räumliche Modulation der Empfindlichkeit, die bewirkt, dass eine sich längs der Achse 11 bewegende Strahlungsquelle abwechselnd positive und negative Signale in den differentiell geschalteten Sensorelementen erzeugt, wie dies bei der Anwendung in passiven Infrarot-Bewegungsmeldern zur Detektion sich bewegender Menschen erwünscht ist.

Die Funktion der Anordnung nach US-A- 5 006 712 kann gemäss der räumlichen Darstellung in Fig. 4 auf folgende Weise einfach dargestellt werden:

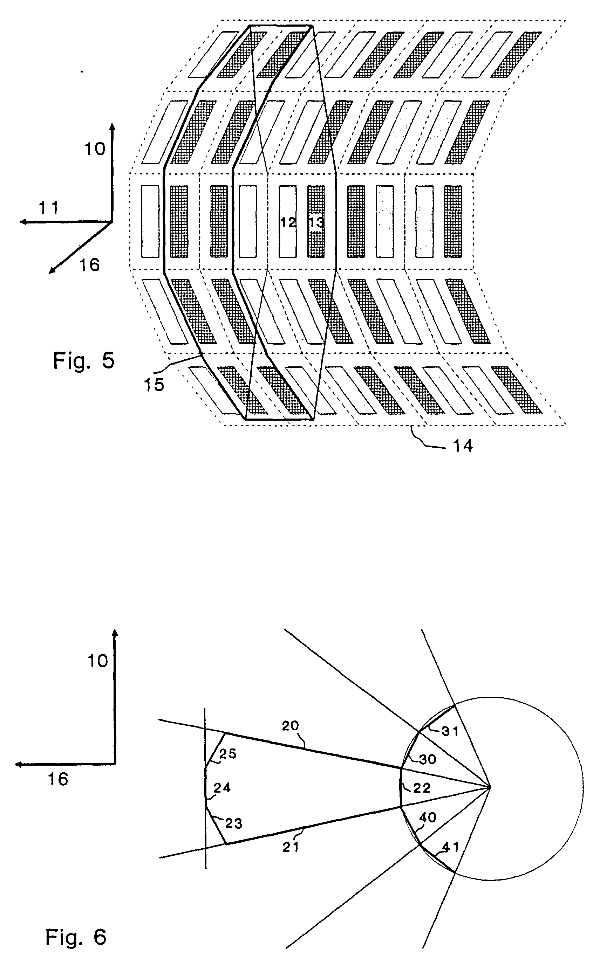

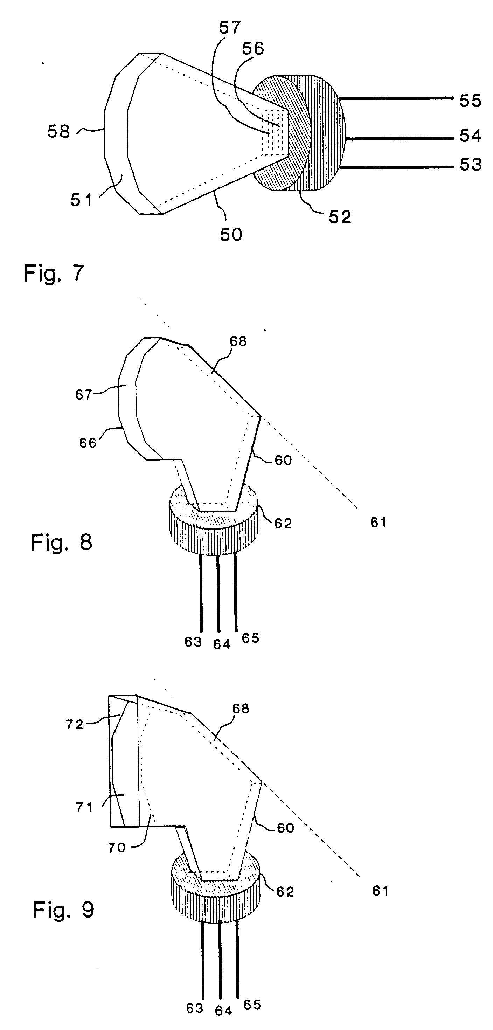

Alle durch den Konus auf den Sensor fallenden Strahlen, und somit alle zur Funktion beitragenden Strahlen können dadurch erhalten werden, dass alle durch die Frontöffnung 15 fallenden Strahlen mit dem Sensor und allen seinen durch die Spiegelflächen erzeugten virtuellen Spiegelbildern zum Schnitt gebracht werden. Bei gegen die Konusachse 16 geneigten Spiegelflächen liegen der Sensor 12, 13 und dessen Spiegelbilder auf einer gewölbten, prismatischen Fläche 14. Diese Spiegelbilder können gesamthaft als das entfaltete Bild der hinteren Öffnung des Konus bezeichnet werden. In Fig. 4 sind auch alle Mehrfachspiegelungen bis zu den 2-fach Spiegelungen in beiden Achsen 10 und 11 gezeichnet. Diese Konstruktion ist beispielsweise in der erwähnten Referenz "The Infrared Handbook", Wolfe/Zissis, Environmental Research Institute of Michigan, USA, 1978, Seite 9-13, in Figur 9-13, oder in der US-A- 5 006 712, Fig. 5 beschrieben. Die mit dieser Konstruktion erhaltenen, auf der Fläche 14 liegenden Spiegelbilder werden als das entfaltete Bild (unfolded diagram) bezeichnet.

Die Anordnung nach Fig. 4 konnte sich für Bewegungsmelder nicht durchsetzen. Dies weil die angestrebte Funktion nur für senkrecht auf den Sensor, in Richtung der Konusachse 16 einfallende Strahlen zutrifft, nicht hingegen oder nur ungenügend in allgemeinen Raumpunkten ausserhalb dieser Achse. Damit geht in praktischen Anwendungen die angestrebte Funktion zu einem grossen Teil verloren.

Dies lässt sich gemäss Fig 4 wie folgt erklären: Durch die ebene Frontöffnung 15 sind bei dem in diesem Beispiel gewählten Blickwinkel mehrheitlich die Spiegelbilder des Sensorelementes 13 zu sehen (dunkel schraffiert), jedoch auch einige Spiegelbilder des Sensorelementes 12 (hell schraffiert) bzw. Teile davon. Da die Sensorelemente 12 und 13 differentiell geschaltet sind, heben sich die Signale auf wenn die Sensorelemente gleichzeitig bestrahlt werden. Die Folge davon ist, dass in Fig.4 die fokussierende Wirkung des Konus für Blickwinkel ausserhalb der Achse dadurch weitgehend wieder verloren geht.

Ziel der vorliegenden Erfindung ist es, eine verbesserte Konusoptik der genannten Art zu schaffen, die eine gezielte Abbildung und Fokussierung in allen Achsen und Richtungen ermöglicht und die Mängel vorbekannter Ausführungen beseitigt, wobei die einfallende Strahlung optimal in einem grösseren Winkelbereich ausgenutzt wird.

Erfindungsgemäss wird diese Aufgabe dadurch gelöst, dass die optisch wirksame Kontur der reflektierenden Flächen an der Frontöffnung derart geformt ist, dass sie, in Richtung der Konushauptachse verschoben, wenigstens angenähert in die gewölbte Fläche (14) fällt, auf der das entfaltete Bild, d.h. die virtuellen Spiegelbilder des Sensors bzw. der den Sensor bildenden Sensorelemente liegen.

Damit wird erreicht, dass nur solche in die Konusoptik eintretende Strahlen wirksam sind, die zu einer Signalverstärkung bzw. Fokussierung der Strahlung auf den Sensor, bzw. die Sensorelemente in erwünschtem Masse beitragen.

Ausführungsbeispiele erfindungsgemässer Anordnungen sind in den Fig. 5 - 9 dargestellt, im Vergleich zu dem in den Fig. 1 - 4 illustrierten Stand der Technik.

Fig. 5 zeigt eine perspektivische Ansicht des Konus, der Sensorelemente und deren Spiegelbilder sowie der erfindungsgemässen Kontur der Frontöffnung.

Fig. 6 zeigt die geometrische Konstruktion der erfindungsgemässen Kontur der Frontöffnung in der Ebene der Achsen 10 und 16.

Fig. 7 zeigt eine praktische Ausführung eines erfindungsgemässen Konus.

Fig. 8 zeigt eine praktische Ausführung des erfindungsgemässen Konus, wobei der Konus durch eine zusätzliche Spiegelfläche abgewinkelt ist.

Fig. 9 zeigt eine erfindungsgemässe Anordnung, wobei die erfindungsgemässe Kontur der grossen Öffnung durch eine in den Konus eingesetzte Blende erreicht wird.

Die in Fig. 5 gezeigte, erfindungsgemässe Anordnung ist in der gleichen Perspektive wie Fig. 4 gezeigt. Es ist in dieser Darstellung leicht zu ersehen, dass die abweichend geformte Kontur 15 der Frontöffnung ausschliesslich Strahlen eintreten lässt, die auf die virtuellen Spiegelbilder des Sensorelementes 13 fallen. Da in diesem Beispiel zehn Spiegelbilder des Sensorelementes 13 in der Kontur 15 zu sehen sind, beträgt der optische Gewinn den Faktor zehn. Da keine Spiegelbilder des Sensorelementes 12 zu sehen sind, tritt durch die differentielle Schaltung der Sensorelemente 12 und 13 keine unerwünschte Verringerung der Empfindlichkeit auf.

Sinngemäss sind, durch die geometrischen Abmessungen des Konus bestimmt, viele andere Richtungen vorhanden, aus denen durch die Kontur der Frontöffnung 15 ausschliesslich Spiegelbilder bzw. das Original nur eines der Sensorelemente zu sehen sind.

Aus anderen dazwischen liegenden Richtungen hingegen können beide Sensorelemente bzw. deren Spiegelbilder gleichermassen gesehen werden. Für Strahlen aus diesen Richtungen heben sich die Ausgangssignale der beiden Sensorelemente gegenseitig auf. Dadurch entsteht die erwünschte räumliche Modulation entlang der Achse 11.
In Fig. 6 ist die geometrische Konstruktion der erfindungsgemässen Kontur der Frontöffnung in der Ebene der Achsen 10 und 16 gezeigt. Der Konus besteht aus den zwei konvergierenden, im Schnitt gezeigten Spiegelflächen 20 und 21, sowie aus den zwei zueinander und zur Zeichenebene parallelen Spiegelflächen, wovon die gezeichnete durch die Streckenabschnitte 20,22,21,23,24,25 begrenzt ist.
Die Frontöffnung dieser Spiegelfläche besteht aus der Kontur 23, 24, 25. Das entfaltete Bild der hinteren Öffnung 22, beziehungsweise die Fläche, auf der sich die Spiegelbilder von 22 befinden, setzt sich in der Ebene des gezeigten Schnittes aus den Strecken 22, 30, 31, 40, 41 zusammen. 30 ist das Spiegelbild von 22, gespiegelt an 20. 31 ist das Spiegelbild von 40, gespiegelt an 20, und somit das Spiegelbild von 22, zweifach gespiegelt an 21 und 20. Sinngemäss umgekehrt gilt dies Für 40 und 41. Es könnten auch noch Spiegelbilder höherer Ordnung eingezeichnet werden.

Die Kontur 15 der Frontöffnung besteht im gezeigten Schnitt dieses Beispiels aus den Strecken 23, 24 und 25, die in der Form und Lage den Strecken 40, 22 und 30 entsprechen, d.h. in Richtung der Konusachse 16 verschoben, mit diesen zusammenfallen. Je nach Grösse der Frontöffnung 15 kann die Kontur durch Strecken oder Teile von Strecken ergänzt werden, die den Spiegelbildern 41 und 31 oder solchen höherer Ordnung entsprechen. Es ist leicht einzusehen, dass die so konstruierte Kontur der Frontöffnung zur erwünschten Wirkung führt.

Fig. 7 zeigt eine praktische Ausführung eines erfindungsgemässen Konus 50, mit der Frontöffnung 51 und dessen Kontur 58. Zusätzlich eingezeichnet ist der daran befestigte Sensor 52 mit den Anschlüssen 53, 54 und 55 und den sich darin befindlichen Sensorelementen 56 und 57.

Fig. 8 zeigt eine weitere praktische Ausführung mit der Frontöffnung 67 und deren Kontur 66, dem Sensor 62 und dessen Anschlüssen 63, 64 und 65, wobei der Konus 60 eine weitere Spiegelfläche 68 in der Richtung 61 enthält. Diese Spiegelfläche 68 bewirkt eine Knickung der Konusachse bzw. eine Umlenkung der Strahlen um, im hier gezeigten Beispiel, einen Winkel von etwa 90°. Die erfindungsgemässe Funktion wird im Vergleich zu Beispielen mit einer geraden Konusachse dadurch nicht oder nur unwesentlich beeinträchtigt. Diese Ausführung kann bei der Anwendung in Geräten mit geringer Bautiefe vorteilhaft sein.

Fig. 9 zeigt eine erfindungsgemässe Anordnung gemäss Fig. 8. Dabei ist der Konus mit einer herkömmlichen ungekrümmten Frontöffnung ausgeführt. Nahe der Frontöffnung 71 ist die optisch wirksame erfindungsgemässe Kontur dadurch erzeugt, dass sie durch eine in den Konus eingesetzte, optisch nicht reflektierende Blende 72 gebildet wird. Die Blende 72 sorgt dafür, dass Strahlen, die vor der Blende in den Konus treffen, nicht auf den Sensor gelangen können, und sich der Konus genau so verhält, wie wenn seine Frontöffnung die erfindungsgemässe Kontur hätte.

Ebenso kann die Anordnung derart ausgeführt werden, dass zwar ein herkömmlicher Konus verwendet wird, wobei jedoch die Konusflächen vor der erfindungsgemässen optisch wirksamen Kontur nicht verspiegelt und daher unwirksam sind.

Der Konus kann, wie bereits erwähnt, als innenverspiegelter Hohlkörper oder als massiver transparenter Körper mit verspiegelten Seitenwänden und strahlungsdurchlässigen Öffnungen ausgeführt sein.

Die erfindungsgemässe Anordnung lässt sich mit Vorteil in Bewegungsmeldern nach dem passiven Infrarotprinzip einsetzen, wobei ein differentieller Sensor mit zwei Sensorelementen verwendet wird. Solche Sensoren sind bekannt, und können nach dem pyroelektrischen Prinzip, als Thermoelemente oder Thermistoren aufgebaut sein. Meistens sind diese Sensoren zusammen mit einem Vorverstärker und einem optischen Filter in einem dichten Gehäuse untergebracht. Solche Bewegungsmelder können zur Steuerung von Energie eingesetzt werden, und speziell zur Alarmgabe oder Meldung an eine Überwachungszentrale bei Bewegung einer Strahlungsquelle, z.B. eines Menschen in dem vom Melder überwachten, d.h. vom Konus erfassten Raumwinkelbereich.

Es sei jedoch darauf hingewiesen, dass die Erfindung nicht auf die vorstehend beschriebenen Beispiele und Verwendungen begrenzt ist, sondern andere Konturgestaltungen der wirksamen Frontöffnung des optisch reflektierenden und strahlungsbündelnden Konus umfasst, die erfindungsgemäss derart geformt sind, dass sie durch Verschiebung entlang der Konushauptachse in diejenige Fläche zu liegen kommt, auf der das entfaltete Bild des Sensors liegt. Unter optischer Strahlung wird nicht nur sichbares Licht, sondern auch andere optisch bündelbare elektromagnetische Strahlung verstanden, insbesondere Infrarot- und Wärmestrahlung.

## Patentansprüche

1. Optisch innenreflektierender Konus (1) mit einer Frontöffnung (2,15) zur Fokussierung der durch die Frontöffnung einfallenden elektromagnetischen Strahlung (4,6,8) auf einen im Bereich einer kleineren hinteren Öffnung (3) angeordneten Sensor (12,13), wobei der Konus paarweise gegenüberliegende, weitgehend ebene, reflektierende Flächen (5,7,20,21) aufweist, von denen wenigstens ein Flächenpaar (5,7,20,21) in der Richtung zur hinteren Öffnung konvergiert, **dadurch gekennzeichnet, dass** die Kontur (15,58,66,70) der reflektierenden Flächen an der Frontöffnung, wenn diese entlang der optischen Achse (16) des Konus verschoben wird, wenigstens angenähert in diejenige gewölbte Fläche (14) zu liegen kommt, auf der das entfaltete Bild, d.h. die virtuellen Spiegelbilder des Sensors bzw. der den Sensor bildenden Sensorelemente liegen.

2. Konus nach Anspruch 1, **dadurch gekennzeichnet, dass** dieser in einer Achse (10) einen Öffnungwinkel von grösser als Null und in seiner anderen Achse (11) einen Öffnungwinkel von wenigstens angenähert Null aufweist.

3. Konus nach Anspruch 2, **dadurch gekennzeichnet, dass** die optisch wirksame Kontur der Frontöffnung (2,15) mehrere zueinander geneigte Stecken (23,24,25) enthält, deren Lage zueinander derjenigen der virtuellen Spiegelbilder (14) entspricht, die durch die gegen die Konusachse (16) geneigten reflektierenden Flächen entstehen.

4. Konus nach einem der Ansprüche 1 - 3, **dadurch gekennzeichnet, dass** dieser als innenreflektierender Hohlkörper (1) ausgeführt ist.

5. Konus nach einem der Ansprüche 1 - 3, **dadurch gekennzeichnet, dass** dieser als Körper (1) aus einem strahlungsdurchlässigen Material mit reflektierenden Seitenflächen und strahlungsdurchlässigen Öffnungen ausgeführt ist.

6. Konus nach einem der Ansprüche 1 - 5, **dadurch gekennzeichnet dass** dieser mittels einer zusätzlichen reflektierenden Fläche (68) in seiner Längsachse (9,16) gefaltet ist.

7. Verwendung des Konus nach einem der Ansprüche 1 - 6 in einem optischen Bewegungsmelder nach dem passiven Infrarotprinzip.

8. Verwendung des Konus nach einem der Ansprüche 1 - 6 in einem optischen Bewegungsmelder mit einem differentiellen Sensor mit zwei Sensorelementen (12,13), die zusammen mit der entsprechenden Kontur (15) der Frontöffnung eine räumliche Modulation der Empfindlichkeit entstehen lassen.

9. Verwendung nach Anspruch 7 oder 8, **gekennzeichnet durch** die Verwendung des Bewegungsmelders zur Steuerung von Energie, wie zur Alarmgabe oder Weitergabe einer Meldung oder dergleichen, bei Bewegung einer Strahlungsquelle, z.B. einer Person, im vom Konus erfassten Raumwinkelbereich.

## Claims

1. Internally reflective optical cone (1) with a front aperture (2,15), collecting impinging electromagnetic radiation (4,6,8), and concentrating this radiation onto a sensor (12,13) arranged close to the rear aperture (3) of said cone, said cone being constituted from pairs of essentially plane, reflective surfaces (5,7,20,21), of which at least one pair of surfaces (5,7,20,21) converge towards the rear aperture, **characterized by** the fact that the contour (15,58,66,70) of the reflective surfaces at the front aperture of said cone has a shape that falls, when shifted along the main axis (16) of the cone, at least approximately into the curved surface that contains the unfolded image, i.e. the sensor and the sensors virtual mirror images.

2. Cone according to claim 1, wherein said cone has an opening angle of more than zero in a first axis, and an opening angle of zero or almost zero in the second axis.

3. Cone according to claim 2, wherein the optically effective contour of the shape of the front aperture (2,15) contains a polygonal chain of lines (23,24,25), that are positioned towards each other in the same angles as the virtual images (14) of the sensor, that are originated by those reflecting cone surfaces that are inclined against the cone axis (16).

4. Cone according to claim 1 to 3, wherein said cone (1) is an internally reflective hollow body.

5. Cone according to claim 1 to 3, wherein said cone (1) is a massive body made from a material transparent to radiation, having reflective side walls and transparent front and rear apertures.

6. Cone according to claim 1 to 5, wherein said cone includes an additional mirror (68) to fold said cone in its main axis (9,16).

7. Application of the invention according to claim 1 to 6 in an optical motion detector using the passive infrared principle.

8. Application of the invention according to claim 1 to 6 in an optical motion detector using a differential sensor having two sensor elements (12,13), and wherein the combination with the contour (15) of the front aperture causes a spatial modulation of the sensitivity.

9. Application of the invention according to claim 7 or 8 to detect the motion of objects such as people moving within the field of view of the cone, and to control the application of energy, to signal an alarm or communicate another information signal accordingly.

## Revendications

1. Un cône (1) à intérieur réfléchissant au niveau optique muni d'une ouverture antérieure (2, 15) pour la focalisation de radiation électromagnétique (4,6,8) faisant incidence dans l'ouverture antérieure, sur un capteur (12,13) apposé près de l'ouverture postérieure (3), et que le cône est formé de paires de surfaces réfléchissantes essentiellement planes se faisant face (5,7,20,21), desquelles au moins une paire de surfaces (5,7,20,21) converge en direction de l'ouverture postérieure, **caractérisé en ce que** le contour (15,58,66,70) des surfaces réfléchissantes près de l'ouverture antérieure, se retrouve, s'il est déplacé le long de l'axe optique (16) du cône, au moins approximativement sur la surface convexe (14), sur laquelle se trouve l'image dépliée, c'est à dire les images virtuelles reflétées du capteur, ou des éléments sensibles formant le capteur.

2. Un cône selon la revendication 1, **caractérisé en ce que** celui-ci présente dans un axe (10) un angle d'ouverture plus grand que zéro et dans son autre axe (11) un angle d'ouverture de zéro ou approximativement zéro.

3. Un cône selon la revendication 2, **caractérisé en ce que** le contour efficace au niveau optique de l'ouverture antérieure (2,15) est formé d'une chaîne polygonale de lignes délimitées (23,24,25) inclinées les unes vers les autres, au même angle que les images reflétées virtuelles du capteur (14), qui sont formées par les surfaces réfléchissantes inclinées contre l'axe du cône (16).

4. Un cône (1)selon une des revendications 1 à 3, **caractérisé en ce que** celui-ci est effectué en forme d'une cavité ayant un intérieur réfléchissant.

5. Un cône selon une des revendications 1 à 3, **caractérisé en ce que** le cône (1) est effectué en forme de corps massif transparent à la radiation avec des parois latérales réfléchissantes et des ouvertures antérieures et postérieures transparentes à la radiation.

6. Un cône selon une des revendications 1 à 5, **caractérisé en ce que** celui-ci est plié dans la direction de l'axe principal (9,16), suite à l'insertion d'une surface réfléchissante supplémentaire (68).

7. L'utilisation du cône selon une des revendications 1 à 6 dans un détecteur optique de mouvement selon le principe de l'infrarouge passif.

8. L'utilisation du cône selon une des revendications 1 à 6 dans un détecteur optique de mouvement ayant un capteur différentiel avec deux éléments sensibles (12,13), qui provoquent, en combinaison avec le contour approprié de l'ouverture antérieure, une modulation spatiale de la sensibilité.

9. L'utilisation selon les revendications 7 ou 8, **caractérisé en ce que** le détecteur de mouvement est utilisé pour le contrôle d'énergie, la signalisation d'alarmes, la transmission d'un signal ou d'autres utilisations semblables, lors de mouvements d'une source de radiation, par exemple d'une personne se trouvant dans le champ visuel du cône.
